# EUROPEAN PATENT APPLICATION

(11) **EP 2 918 171 A1**
(43) Date of publication of application: **16.09.2015**
(21) Application number: 14159940.7
(22) Date of filing: 14.03.2014
(51) Int. Cl.: A01N 37/28, A01P 21/00

(54) **Novel plant growth regulators and their use in modulating organ number**

(71) Applicant: University of Vienna, 1010 Vienna (AT)
(72) Inventor: The designation of the inventor has not yet been filed
(74) Representative: Grünecker Patent- und Rechtsanwälte PartG mbB

(57) **Abstract**

The present invention relates to a potent plant growth regulator. More particularly, the present invention relates to a potent plant growth regulator having the basic structure:

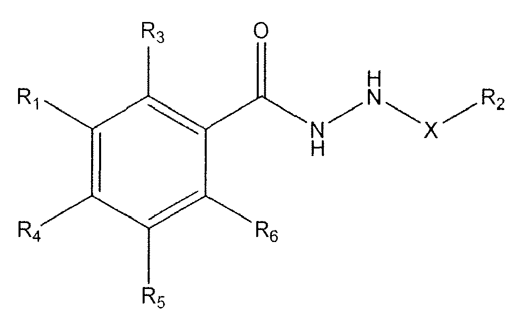

The present invention provides a potent plant growth regulator which is capable of both inhibiting shoot branching and enhancing root formation, which is highly advantageous in agriculture, horticulture and forestry. The present invention further relates to compositions for regulating plant growth comprising the same, a process for growth regulation of plants, and the use of the compounds and compositions of the invention for growth regulation of plants.

## Description

The present invention relates to novel plant growth regulators of Formula I as defined herein, compositions for regulating plant growth comprising the same and a growth medium, a process for growth regulation of plants, and the use of the compounds and compositions of the invention for growth regulation of plants, especially in agriculture, horticulture and forestry.

### Background art

Organ formation in plants is a continuous process and mediated by so called meristems, which are stem cell centers. Their activity is regulated by genetic as well as external factors allowing the plant to adapt its body plan to ecological niches and a changing environment. Moreover, the continuous organ formation capacity is the basis of their extraordinary regeneration potential. Shoot architecture is particularly defined by activation or dormancy of axillary buds, resulting in different numbers and position of shoot branches (Domagalska and Leyser, 2011). The level of shoot branching has a direct impact on a number of productivity parameters in agriculture, horticulture and forestry, including light harvesting potential as well as the number and quality of flowers, fruits and seeds, and wood quality. Furthermore, there is a strong interest in the seasonal control of bud break e.g. in fruit trees (Basra, 2000).

Currently optimization of branch number is mainly achieved by manual mechanical pruning, which is a tedious and costly process and requires skilled persons. Thus, chemical pruning, pinching and disbudding agents were developed e.g. compounds which suppress the outgrowth of suckers like maleic hydrazide or 2-Ethyl-1,3-hexanediol. However, they are thought to act by general phytotoxic activity against meristematic tissue, which does not allow simple discrimination between apical and axillary shoot meristems (Basra, 2000). Shoot branching is also controlled by endogenous plant hormones like auxin, cytokinin and strigolactones (Domagalska and Leyser, 2011). Their direct use as plant growth regulators is however restricted based on their broad spectrum of physiological and developmental effects. Moreover, some of them have structural requirements, which make chemical synthesis labor-intensive and expensive.

Root formation capacity is an important prerequisite in plant tissue culture and for vegetative propagation of cuttings. These techniques are part of diverse plant biotechnology applications and thus strategically important to ensure food, feed and biomass production. Particularly the use of in vitro cloning technology allows the massive clonal propagation of disease free and uniform planting material in all horticultural areas.

Reproduction of elite varieties by micropropagation or cutting is a multi-step process with each step presenting a potential limiting factor in the production process. Notably many species are recalcitrant, and even responsive species show a strong variation between cultivars (De Klerk et al., 1999). Therefore, there is an ongoing interest to improve micropropagation protocols for more efficiency and quality. Hormone-like compounds are fundamental constituents of rooting protocols, however the spectrum of growth regulators that are commercially available is very restricted and essentially represent auxin analogs. Auxin and its analogs are known to induce adventitious and lateral root formation in intact plants and isolated organs. However, since auxin also has considerable mitogenic activity, its external application may cause malformations in propagules. Auxins have also been shown to have a rather negative effect on adventitious/lateral root outgrowth further restricting the range of applicable concentrations. This limits their utility for resolving specific in vitro cultivation problems like rooting recalcitrance.

Thus there is a need for novel plant growth regulators with more specific modes of action to limit side effects and provide cheaper means of production. In particular, there is a need of novel plant growth regulators that inhibits shoot branching and promotes root formation. Furthermore there is a need of plant growth regulators that enhances polar auxin transport in plants without having the negative effects of auxin and its analogs itself.

### Summary of the invention

It has now surprisingly found that certain hydrazide derivatives can specifically suppress the outgrowth of axillary shoot meristems without affecting the activity of the main shoot and thus enhance apical dominance (favours the growth of the primary shoot at the expanse of lateral branches. This effect can be used to reduce or inhibit shoot branching to optimize shoot architecture of crops important in horticulture, agriculture and forestry e.g. to increase the quantity and quality of yield and/or the appeal of ornamental plants. Modulation of growth in favour of the apical shoot is important to establish the primary growth axes in fruit and wood trees, generation of tall-stemmed fruit and ornamental plants, in fruit thinning approaches and suppression of sucker growth.

Moreover these hydrazide derivatives also exert a promoting effect on adventitious/lateral root formation. This effect can be used e.g. to promote rooting of cuttings of recalcitrant species/cultivars for vegetative propagation, to establish root organs in diverse plant tissue culture applications where a high rate of root formation is desired and to increase root density in plants e.g. to enhance the uptake of water and/or nutrients and to boost symbiotic interactions with root-attached or root-invading microorganisms.

The compounds of the invention were found to promote the polar transport of the plant hormone auxin, which is a key regulator of shoot branching and adventitious/lateral root formation. The compound can be used in basic and applied research to study polar auxin transport-dependent processes. Moreover it can be used in all applications, where it is desired to enhance the effect of endogenous auxin.

Through intensive studies, the present inventors have determined a basic structure, which has been shown to be highly advantageous in growth regulation of plants. The inventors developed plant growth regulators which are capable of enhancing polar auxin transport in plants without having the negative effects of auxin and its analogs itself.

In one embodiment of the invention, there is provided a plant growth regulator of Formula I: 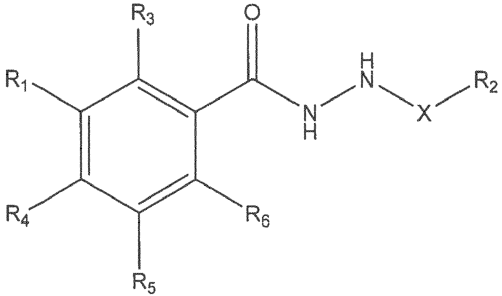 or a salt thereof, wherein
R₁ is halogen or pseudohalogen;
R₂ is C₁-C₁₀ alkyl, C₅-C₈ cycloalkyl, C₄-C₁₂ heterocycle, C₆-C₁₂ aryl, C₆-C₁₂ aryl substituted with C₁-C₄ alkyl or halogen;
X is carbonyl or thionyl; and
R₃, R₄, R₅, and R₆ are independently selected from the group consisting of hydrogen, halogen, C₁-C₁₀ alkyl or C₁-C₁₀ haloalkyl.

The term *"halogens"* as used herein comprises fluorine, chlorine, bromine, and iodine. While the compounds of the invention preferably comprise bromine or iodine, most preferred is iodine. The term *"pseudohalogen"* as used herein and in the claims annexed hereto refers, for instance, to the cyano group and the thiocyano group.

As used herein, the term *"alkyl'* refers to straight-chain or branched C₁-C₁₀-kyl (C₁ alkyl, C₂ alkyl, C₃-alkyl, C₄-alkyl, C₅-alkyl, C₆-alkyl, C₇-alkyl, C₈-alkyl, C₉-alkyl or C₁₀-alkyl), for example methyl, ethyl, n-propyl, isopropyl, n-butyl, isobutyl, sec-butyl or tert-butyl,straight or branched pentyl, straight or branched hexyl, straight or branched heptyl, straight or branched octyl. In one embodiment alkylpreferably refers to C₁C₆ alkyl, more preferred is C₁-C₄ alkyl. In an alternative embodiment alkyl refers to C₅-C₁₀ alkyl, preferably C₆-C₈ alkyl, more preferably C₇ alkyl.The alkyl chain may be substituted or unsubstituted. Suitable substituents are halogens, C₁-C₆ alkylcarbonyl, C₁-C₆ alkoxycarbonyl, hydroxycarbonyl, aminocarbonyl, N- C₁-C₆ alkyl amine, N,N- di- C₁-C₆ alkyl amine, C₁-C₆ alkylthio, C₁-C₆ haloalkylthio, C₁-C₆ alkylsulfinyl, C₁-C₆ haloalkylsulfinyl, C₁-C₆ alkylsulfonyl.

As used herein, the term *"cycloalkyl"* refers to a non-aromatic ring system comprising from about 3 to about 10 ring carbon atoms; preferably about 5 to 8 ring carbon atoms. Non-limiting examples of include cyclopentyl or cyclohexyl.

The term *"heterocycle"* as used herein, refers to a 4 to 12 membered ring, which can be aromatic or non-aromatic, saturated or non-saturated, containing at least one heteroatom selected from O or N or S or combinations of at least two thereof, interrupting the carbocyclic ring structure. The heterocyclic ring can be interrupted by a C=O; the S heteroatom can be oxidized. Heterocycles can be monocyclic or polycyclic. Heterocyclic ring moieties can be substituted by hydroxyl, C₁₋₃ alkyl or halogens. Usually, in the present case, heterocyclic groups are 5 or 6 membered rings. Examples are pyridine, furan, azetidine, thiazol, thiophene, oxazol, pyrazol, oxadiazole, triazol.

As used herein, the term *"aryl"* refers to an aromatic substituent containing a single aromatic ring (e.g., phenyl) or multiple aromatic rings that are fused together (e.g., naphthyl or biphenyl), that typically comprises from 5 to 14 and preferably 6 to 12 carbon atoms. Illustrative aryl groups contain one aromatic ring or two fused or linked aromatic rings, e.g., phenyl, naphthyl, biphenyl, diphenylether, diphenylamine, benzophenone, and the like. The aryl moiety may be independently substituted with one or more substituent groups, including C₁₋₆ alkyl or halogen.

In one embodiment, R₁ of Formula I of the plant growth regulator as defined herein is halogen, preferably iodine or bromine, most preferred iodine.

In a further embodiment, R₂ of Formula I is benzyl substituted with C₁-C₄ alkyl or hydrogen. Preferably R₂ is benzyl substituted with methyl at the meta, ortho, or para positions. Most preferably, R₂ is ortho methyl benzyl of the plant growth regulator of Formula I as defined herein.

In another embodiment of the invention, R₂ is benzyl substituted with C₁-C₄ alkyl or halogen; X is carbonyl, and R₃ R₄ R₅ and R₆ of the plant growth regulator of Formula I as defined herein are each hydrogen.

In another embodiment of the invention, the plant growth regulator of formula I has any of the following structures:

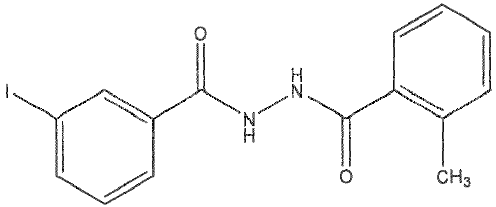

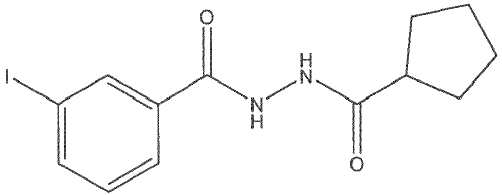

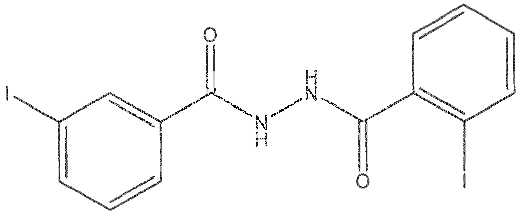

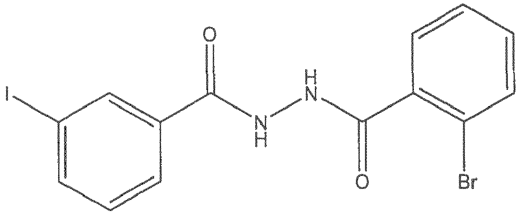

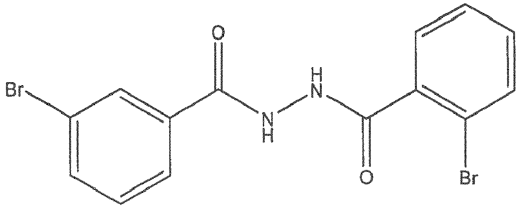

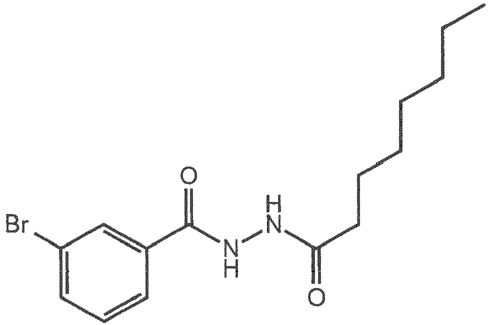

One exemplary embodiment of the present invention is the plant growth inhibitor N'-(3-iodobenzoyl)-2-methylbenzohydrazide 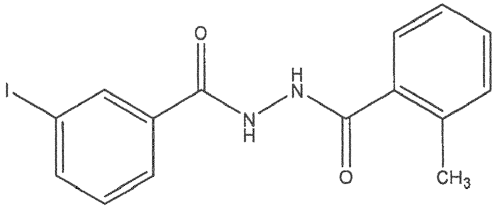 also named herein Ramostatin or RS. The synthesis of Ramostatin is within the knowledge of the person skilled in the art.

Compounds of Formula I, including ramostatin, can conveniently be synthesized from suitable precursors by the skilled person.

As used herein, the terms *"plant growth regulator"* or *"plant growth modulators"* includes compounds eliciting a response in terms of plant organ number modulation in a dose dependent manner. Plant organ number modulation refers to the promotion or inhibition of plant organ growth or development. Inhibition may be complete (blockage) or partial. For instance, plant organ number modulation can relate to inhibition of shoot branching or enhancement of root formation.. Shoot branching means the process of outgrowth of axillary or adventitious buds, resulting in the formation of vegetative shoots, flowers or inflorescences. Inhibition means to permanently or temporarily suppress the growth of buds. The inhibition can be complete by affecting all axillary/adventitious buds or partial affecting only a subset of axillary/adventitious buds.

Enhancement of root formation is used to mean, in particular, the stimulation of adventitious and/or lateral root formation.

Modulation of plant growth by the use of the inventive compounds was found to be at least partially based on enhanced transport capacity of the plant hormone auxin. Thus the present invention also pertains to use of the compounds as defined herein to enhance auxin transport capacity in plants.

As used herein, *"plant organ"* means plant parts having rather distinct form, structure, and function, such as those defined herein above, in particular roots, shoots, stems, buds, seeds, fruits, and leaves, but not limited thereto. This includes any organ of a plant in plantation or in culture.

The *"plant"* as referred to herein may be any plant in plantation or in culture, especially agricultural crops, horticultural crops or silvicultural crops; such as those defined herein, e.g. cut flowers, or fruit trees.

Surprisingly, the inventors could show that the plant growth regulator of the present invention has a strong influence on organ number of plants, especially the plant growth regulator of Formula I inhibits shoot branching and at the same time enhances root formation of plants.

Accordingly, in a further embodiment of the invention, the plant growth regulator as defined herein modulates organ formation in plants.

In a further embodiment of the invention, the plant growth regulator as defined herein inhibits shoot branching and/or enhances root formation.

The invention further provides a composition for regulating plant growth comprising one or more plant growth regulators as defined herein as an active ingredient.

In a further aspect, the present invention also relates to a composition comprising an effective and non-phytotoxic amount of an active compound of formula (I).

The expression *"effecfive and non-phytotoxic amount"* means an amount of composition according to the invention that is sufficient for modulating organ number, enhancing the plant growth, yield and vigor and that does not entail any appreciable symptom of phytotoxicity for the said plant or crop. Such an amount can vary within a wide range depending on the type of crop, the climatic conditions and the compounds included in the composition according to the invention. This amount can be determined by systematic field trials that are within the capabilities of a person skilled in the art.

Thus, according to the invention, there is provided a composition comprising, as an active ingredient, an effective amount of a compound of formula (I) as herein defined and an agriculturally acceptable support, carrier or filler.

In the present specification, the term *"support, carrier or filler"* denotes a natural or synthetic, organic or inorganic material with which the active material is combined to make it easier to apply, notably to the parts of the plant. This support, carrier or filler is thus generally inert and should be agriculturally acceptable. The support may be a solid or a liquid (such as a solvent). Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

An "effective amount" of the composition is an amount that significantly alters organ number when compared with the organ number of plants that have not been treated with the composition. In general, the composition according to the invention may contain from 0.00000005 to 99% (by weight) of active ingredient, preferably 0.0000001 to 70% by weight, usually formulated with a solvent. The agriculturally appropriate solvent is preferably an aqueous solvent, such as water. It may be appropriate to solubilize the compounds in a small volume of organic solvent as acetone, and then to dilute with water.

Active ingredients concentration in the composition generally corresponds directly or after dilution to the use rate for this particular active ingredient. The rates of application of compounds of Formula (I) may vary within wide limits and depend on the nature of the soil, the method of application (pre- or post-emergence; seed dressing; application to the seed furrow; no tillage application etc.), the crop plant, the prevailing climatic conditions, and other factors governed by the method of application, the time of application and the target crop. For foliar or drench application, the compounds of Formula (I) according to the invention are generally applied at a rate of from 1 to 2000 g/ha, especially from 5 to 1000 g/ha.

Other additives that may be applied either simultaneously or sequentially include fertilizers (e.g., calcium, nitrogen, potassium, phosphorous) and micronutrients (e.g., copper, aluminum, magnesium, manganese, and zinc ions).

The composition may also comprise other additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. The presence of at least one surfactant is generally essential when the active material and/or the inert support are water-insoluble and when the vector agent for the application is water. Preferably, surfactant content may be comprised between 5% and 40% by weight of the composition.

Additional components may also be included, e.g. protective colloids, adhesives, thickeners, thixotropic agents, penetration agents, stabilisers, sequestering agents. More generally, the active materials can be combined with any solid or liquid additive, which complies with the usual formulation techniques. The compositions may be formulated for instant release, or for controlled release over an extended time-period.

Compositions according to the present invention can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule (slow or fast release), hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder. The skilled person is familiar with how to create formulations of these types, and can consult suitable reference texts, such as the Manual on Development and Use of FAO Specifications for Plant Protection Products.

These compositions include not only compositions which are ready to be applied to the plant or seed to be treated, or in furrow in the soil, by means of a suitable device, such as a spraying or dusting device, but also concentrated commercial compositions which must be diluted before they are applied to the crop.

In another embodiment of the invention, the composition may further comprise a pesticidal active ingredient. Examples of pesticides useful in compositions include fungicides, insecticides, bactericides, nematicides, acaricides, molluscicides, attractants, sterilants, growth regulators, herbicides, safeners, semiochemicals pheromone active substance or other compounds with biological activity.

In an embodiment of the invention, the composition may further comprise another active ingredient which enhances the yield, vigor or growth of the plants, which improves the germination of seeds and vitality of seedlings, which acts as seed safener, which improves nutrient uptake or symbiotic interaction by the plant, or which improves the biotic or abiotic environmental stress tolerance of a plant. Examples of said compounds include strigolactone compounds, lipochito-oligosaccharide (LCO) compounds, acyl-homoserine lactone (AHL) compounds, flavonoids (such as flavones, flavanols, flavonols, flavanones, isoflavones, hesperetin, formonometin, genistein, daidzein, naringenin, luteolin, apignenin), chitinous compounds (such as chitin or chitosan), plant activators (such as acibenzolar or probenazole), phytohormones (such as Gibberellic acid), plant growth regulators (such as trinexapac- ethyl, prohexadione-Ca, paclobutrazol, brassinolide, forchlorfenuron, hymexazol, thiametoxam), or other plant regulators (such as benzofluor, buminafos, carvone, ciobutide, clofencet, cloxyfonac, cyanamide, cyclanilide, cycloheximide, cyprosulfamide, epocholeone, ethychlozate, fenridazon, heptopargil, holosulf, inabenfide, karetazan, lead arsenate, methasulfocarb, prohexadione, pydanon, sintofen, triapenthenol).

Examples of plant growth regulators which may be used in combination with the plant growth regulator of the invention include, but are not limited to antiauxins (clofibric acid, 2,3,5-tri-iodobenzoic acid), auxins (4-CPA, 2,4-D, 2,4-DB, 2,4-DEP, dichlorprop, fenoprop, IAA, I BA, naphthaleneacetamide, [alpha]-naphthaleneacetic acid, 1 -naphthol, naphthoxyacetic acid, potassium naphthenate, sodium naphthenate, 2,4, 5-T), cytokinins (2iP, benzyladeine, kinetin, zeatin), defoliants (calcium cyanamide, dimethipin, endothal, ethephon, merphos, metoxuron, pentachlorophenol, thidiazuron, tribufos), ethylene inhibitors (aviglycine, 1 - methylcyclopropene), ethylene releasers (ACC, etacelasil, ethephon, glyoxime), gibberellins (gibberellic acid, gibberellins, including non-cyclopropene compounds that show gibberellin- like activity, such as, for example, helminthosporic acid, phaseolic acid, kaurenoic acid, and steviol), growth inhibitors (abscisic acid, ancymidol, butralin, carbaryl, chlorphonium, chlorpropham, dikegulac, flumetralin, fluoridamid, fosamine, glyphosine, isopyrimol, jasmonic acid, maleic hydrazide, mepiquat, piproctanyl, prohydrojasmon, propham, 2,3,5- tri-iodobenzoic acid), morphactins (chlorfluren, chlorflurenol, dichlorflurenol, flurenol), growth retardants/modifiers (chlormequat, daminozide, flurprimidol, mefluidide, paclobutrazol, cyproconazole, tetcyclacis, uniconazole, ancymidol, trinexapac-ethyl, and progexadione-CA), growth stimulators (brassinolide, forchlorfenuron, hymexazol, 2-amino-6-oxypurine derivatives, as described below, indolinone derivates, as described below, 3,4-disubstituted maleimide derivatives, as described below, and fused azepinone derivatives, as described below). The term additionally includes other active ingredients such as benzofluor, buminafos, carvone, ciobutide, clofencet, cloxyfonac, cyclanilide, cycloheximide, epocholeone, ethychlozate, ethylene, fenridazon, heptopargil, holosulf, inabenfide, karetazan, lead arsenate, methasulfocarb, prohexadione, pydanon, sintofen, triapenthenol, and trinexapac. Additional plant growth regulators include indolinone derivative plant stimulators described in WO 2005/1 07466; 3,4-disubstituted maleimide derivatives described in WO 2005/1 07465; fused azepinone derivatives described in WO 2005/1 07471 ; and 2-amino-6- oxypurine derivatives described in WO 2005/1 07472.

The invention further provides a process for growth regulation of plants comprising the step of contacting the plant with a plant growth regulator as defined herein. The plant growth regulator may be applied directly to any part of the plant; e.g. by spraying or by applying to the growth medium. In one embodiment a plant propagation material is contacted with the plant growth regulator. Preferably the plant propagation material is a seed. As used herein "plant propagation materials" refers to any generative part of a plant which can be used for multiplication of the plant or vegetative plant materials such as cuttings and tubers. Particular examples are seeds, roots, fruits, tubers, cuttings, grafts, bulbs and rhizomes.

A *"growth, medium"* as used herein refers to any natural or artificial plant growth medium which is suitable for germination, rooting and propagation of plants; such as those defined herein; e.g. peat moss, vermiculite, perlite, wood bark, coir, sawdust, certain types of fly ash, pumice, plastic particles, glass wool, rock wool, and certain polymer-based foams are commonly used either alone or in various combinations with each other and/or natural soil. Suitable adjuvants include ground natural minerals, such as kaolins, clays, chalc and talk; ground synthetic minerals, such as silicates and highly dispersed silica; anionic or non-ionic emulsifiers; surfactants, such as alkali metal salts lignosulfate and naphthalene sulfonic acid; and dispersing agents, such as methylcellulose.

The concentration of the plant growth regulator within the growth medium, preferably is about 5 to 100 µM; more preferably about 10 to 50 µM.

Thus, according to a further aspect, the present invention provides a method to modulate organ number e.g. to optimize plant growth, yield and vigor of a plant or crop characterized in that a composition according to the invention is applied via seed treatment, foliar application, stem application, drench/drip application (chemigation) to the seed, the plant or to the fruit of the plant, or to soil, particularly in furrow, and/or to inert substrate (e.g. inorganic substrates (e.g. sand, rockwool, glasswool, expanded minerals (e.g. perlite, vermiculite, zeolite, expanded clay)), Pumice, Pyroclastic materials/tuff, synthetic organic substrates (e.g. Polyurethane), organic substrates (e.g. peat, composts, tree waste products (e.g. coir, wood fibre/chips, tree bark) and/or to a liquid substrate (e.g. floating hydroponic systems, Nutrient Film Technique, Aeroponics) wherein the plant is growing or wherein it is desired to grow. For foliar or drench application, the compounds of Formula (I) according to the invention are generally applied at a rate of from 1 to 2000 g/ha, especially from 5 to 1000 g/ha.

Moreover the composition can also be applied under sterile or unsterile tissue culture conditions to liquid or solid plant growth medium (e.g. micropropagation approaches) e.g. Murashige-Skoog-Medium (Murashige and Skoog, 1962), Gamborg B5 medium (Gamborg, et al. 1968), ATS medium (Lincoln et al., 1991) or variants thereof. When directly applied to the liquid or solid growth medium concentration of the active ingredient as defined herein is about 19 mg/Kg to 380 mg/Kg, preferably about 76 mg/Kg to 304 mg/Kg, or about 114 mg/Kg to 266 mg/Kg, most preferably 38 mg/Kg to 190 mg/Kg. The applied amount of the active ingredient is calculated in relation to the weight of the growth medium.

Treated plants can be grown on fields, in greenhouses, in vitro, with or without artificial light.

The invention further provides the use of a plant growth regulator as defined herein for modulation of organ numbers in plants. In one aspect, the invention provides the use of compounds of the invention to inhibit shoot branching, for instance by inhibiting the development and outgrowth of axillary buds. In another aspect, the invention provides the use of compounds of the invention to promote lateral root formation, such as by enhancing adventitious root formation from the hypocotyl. The method of treatment according to the present invention is useful to treat propagation material such as cuttings, bulbs, pricking out tubers or rhizomes, but also seeds, seedlings or seedlings pricking out and plants or plants pricking out. This method of treatment can also be useful to treat roots. The method of treatment according to the present invention can also be useful to treat the overground parts of the plant such as trunks, stems or stalks, leaves, flowers and fruit of the concerned plant.

Among the plants that can be treated by the method according to the present invention, mention may be made of cotton; flax; vine and trees for wood production; fruit or vegetable crops such as Rosaceae sp. (for instance pip fruit such as apples and pears, but also stone fruit such as apricots, almonds and peaches), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (for instance banana trees and plantains), Rubiaceae sp., Theaceae sp., Sterculiceae sp., Rutaceae sp. (for instance lemons, oranges and grapefruit); Solanaceae sp. (for instance tomatoes and potatoes), Liliaceae sp., Asteraceae sp. (for instance lettuces), Umbelliferae sp., Cruciferae sp., Chenopodiaceae sp., Cucurbitaceae sp., Fabaceae sp. (for instance peas), Rosaceae sp. (for instance strawberries); major crops such as Graminae sp. (for instance maize, lawn or cereals such as wheat, rice, barley and triticale), Asteraceae sp. (for instance sunflower), Cruciferae sp. (for instance oil seed rape); Ornamental crops such as Rosaceae (for instance Rosa), Asteraceae (for instance Chrysanthemum, Gerbera, Ostespermum), Caryophyllaceae (for instance Dianthus), Solanaceae (for instance Petunia), Geraniaceae (for instance Pelargonium), Scrophulariaceae, Euphorbiaceae (for instance Poinsettia), Ericaceae (for instance Erica, Calluna, Azalea), Amaryllidaceae, Orchidaceae, Liliaceae, Iridaceae. This list does not represent any limitation.

Crops are to be understood as also including those crops, which have been modified by conventional methods of breeding or by genetic engineering.

### Brief description of the drawings

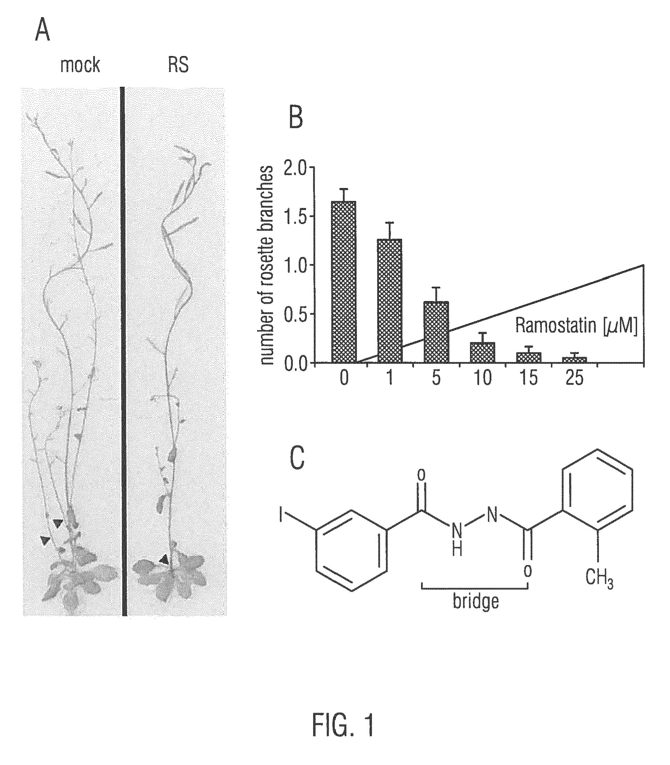

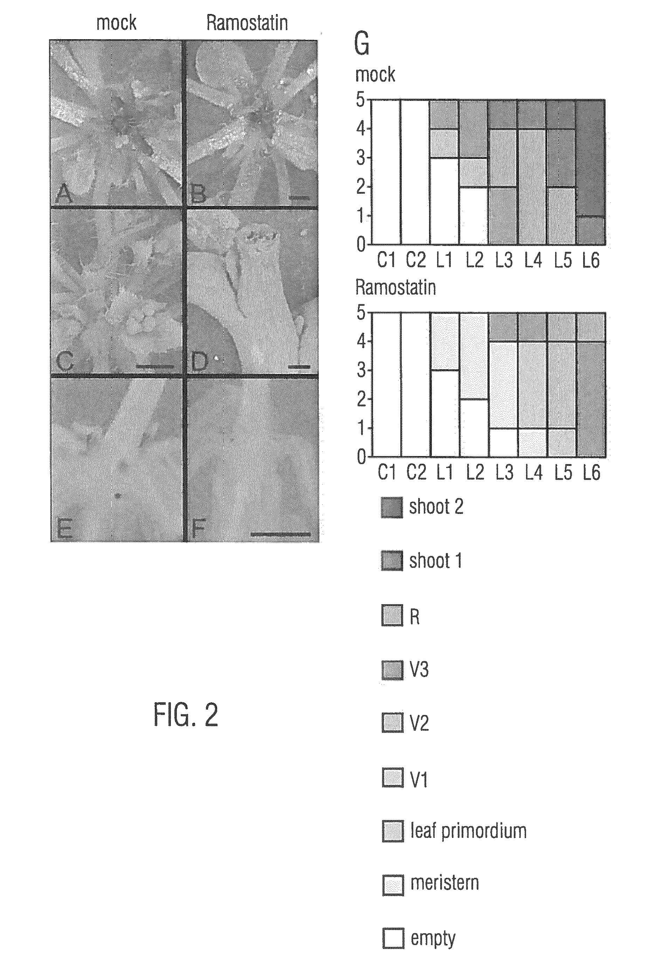

**Figure 1** shows that Ramostatin inhibits axillary shoot branching in a dose dependent manner.
   A) 25 µM Ramostatin applied in the growth medium (right panel) totally suppresses rosette branching whereas plants only treated with the solvent DMSO showed between 2-3 rosette branches (mock, left panel); plant age: 40 days
   B) Dose dependent inhibition of rosette branching by Ramostatin. Error bars show SE (n>10).
   C) Structure of Ramostatin
Figure 2 shows that Ramostatin strongly attenuates development and outgrowth of axillary rosette shoots.
   A) Top view on rosette of mock-treated plant.
   B) Top view on rosette of plant treated with 25 µM Ramostatin.
   C) Scanning electron microscopic picture of axillary area of mock-treated plant.
   D) Scanning electron microscopic picture of axillary area of RS-treated (25µM) plant
   E) Analysis of Stem cell marker CLV3::GUS in axils of rosette leaves of mock-treated plant.
   F) Analysis of Stem cell marker CLV3::GUS in axils of rosette leaves of RS-treated (25µM) plant
   G) Developmental stages of buds in the axils of c rosette leaves (Li to L6) of 5 mock-treated (upper graph) and 25 uM RS-treated (lower graph) individuals. Developmental stages are defined in Methods: empty axil (white), meristem (yellow), leaf primordia (orange), vegetative 1 (light green), vegetative 2 (medium green), vegetative 3 (dark green), and reproductive (red).

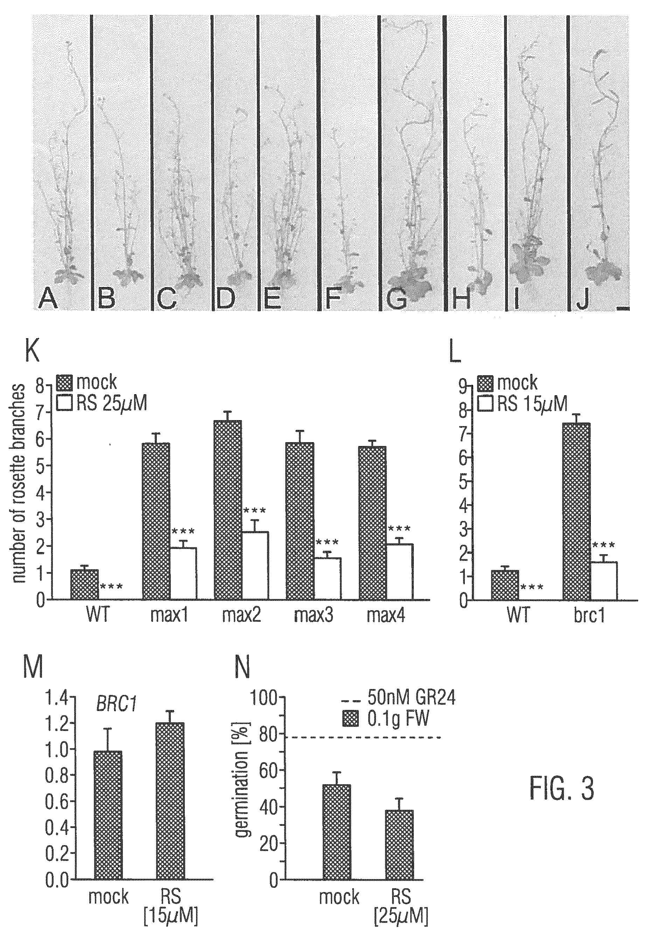

**Figure 3** shows that Ramostatin acts in a strigolactone- and BRC1-independent manner. Figures A-N show the following:
   A-J) Effect of RS on max mutants; wild-type mock-treated (A), wild-type 25 µM RS-treated (B) max1 mock-treated (C), max1 25 µM RS-treated (D), max2 mock-treated (E), max2 25 µM RS-treated (F), max3 mock-treated (G), max3 25 µM RS-treated (H), max4 mock-treated (I), max4 25 µM RS-treated (J).
   K) Quantitative analysis of RS effect on max mutant branching.
   L) Quantitative analysis of RS effect on brcl branching.
   M) qRT-PCR analysis of BRC1 expression in mock-treated and 15µM RS-treated plants.
   N) Germination frequency of *Orobanche* seeds on root exudates of mock-treated and 15µM RS-treated plants.
Figure 4 shows that Ramostatin acts in an auxin-dependent manner. Figures A and B show the following:
   A) Ramostatin can not inhibit rosette branch outgrowth in decapitated plants.
   B) Ramostatin inhibits outgrowth of excised nodal branches only in the presence of apically applied auxin.
Figure 5 shows that Ramostatin enhances polar auxin transport capacity in florescence stems. Figures A to C show the following:
   A) RS increases activity of the auxin responsive reporter DR5::GUS in axills of rosette leaves and vascular bundels of inflorescence stems.
   B) RS enhances polar auxin transport in stem segments.
   C) RS enhances polar auxin transport capacity in stem segments.
**Figure 6** shows that Ramostatin enhances lateral and adventitious root formation. Figures A to C show the following:
   A) Induction of lateral root primordia by different RS concentrations (left panel), lateral root primordia were visualized by DRS::GUS staining; RS-induced lateral root induction is suppressed by co-application of 0.3 µM NPA (right panel).
   B) Analysis of RS-triggered adventitous root formation in wild-type, max1 and max2.
   C) Mock-treated hypocotyl (left photo) and RS-treated hypocotyl (right photo): red arrowheads highlight adventitious roots formed.

The following examples are provided for purposes of illustration, not limitation. Unless otherwise indicated, plants used in the Examples are *Arabidopsis thaliana.*

### Best mode of carrying out the invention

### Example 1

### Identification of N'-(3-iodobenzoyl)-2-methylbenzohydrazide

To identify novel plant growth regulators with a specific effect on shoot branching a molecular marker-based small molecule screen was performed encompassing 18.000 structurally diverse compounds. Among them we identified N'-(3-iodobenzoyl)-2-methylbenzohydrazide as a compound that modulate the rate of organ formation in plants.

### Example 2

### Effect on shoot branching

To test the effect of Ramostatin (N'-(3-iodobenzoyl)-2-methylbenzohydrazide) on shoot branching, plants were grown in jars under sterile conditions (Week, sealed with Leucopor, BSN medical) on 50 ml of ATS media (Lincoln et al., 1990) containing 1% sucrose and 0.7% agar, supplemented with indicated concentrations of the compound. The compound was added as a 1000-fold stock dissolved in DMSO. Seeds were sterilized by immersion for 10 min in 1% (w/v) chlorine bleach dissolved in 90% ethanol, washed three times in 96% ethanol and dried before use. Five seeds were placed in each jar and cold treated for at least 2 days in the dark at 4°C. Plants were then placed in a growth room (24 °C, 16-h light period, around 150 µmol m⁻² s⁻¹ photosynthetically active radiation) for 40-50 days, until cessation of primary meristem activity and analyzed for axillary rosette branching and documented, thereafter.

Ramostatin (RS) totally blocked the outgrowth of axillary rosette shoots in Arabidopsis at a concentration of 25 µM without significantly affecting the growth of the primary inflorescence stem (Fig 1A, C). RS inhibits Arabidopsis rosette branching in a dose dependent manner with significant effects already visible at a concentration of 5 µM (Fig 1B).

Morphological and molecular analysis of RS-treated plants revealed that the compound strongly attenuated the development and outgrowth of axillary buds of the rosette leaves (Fig. 2A-G). Whereas in mock-treated plants the buds from leaves 4 to 6 were all in the reproductive state, RS-treated buds stayed small and did not proceed beyond the vegetative growth phase (Fig. 2C, D and G). The developmental stage of axillary plants was assessed according to Aguilar-Martinez et al., 2007.

The reduced activity of RS-treated buds was also reflected by a diminished expression level of the meristem marker CLV3 (Fig. 2E-F). For histochemical analysis of CLV3 expression, CLV3::GUS (Gross-Hardt et al., 2002) plants were grown in jars as described above. Plants were first placed in 90% (w/v) acetone for 30min on ice, washed once with water, placed in X-Gluc staining solution (0.5 mg/mL 5-bromo-4-chloro-3-indoyl-b-D-glucuronide, 50mM sodium phosphate [pH 7.0], 0.05% Triton-X-100, 0.1 mM K₄Fe(CN)₆, and 0.1 mM K₃Fe(CN)₆), evacuated for 15 min and incubated at 37°C for 24 hr. Tissue was then destained in 96% (w/v) ethanol followed by stepwise rehydration to 10% (w/v) ethanol.

### Example 3

### Effect on the outgrowth of axilliary buds

Strigolactones have been shown to negatively regulate the outgrowth of axillary buds (Domagalska and Leyser, 2011). To test whether Ramostatin inhibits shoot branching in a strigolactone-dependent manner we applied the compound to different biosynthesis (*max*1*,* 2 and 3) and perception mutants *(max2)* of this plant hormone. Wild-type Col-0, *max1-1* and *max2-1* (Stirnberg et al., 2002), *max3-9* (Booker et al., 2004), *max4-1* (Sorefan et al., 2003) and *brc1-2* (Aguilar-Martinez et al., 2007) plants were grown in jars under sterile conditions (Weck, sealed with Leucopor, BSN medical) on 50 ml of ATS media (Lincoln et al., 1990) containing 1% sucrose and 0.7% agar, supplemented with or without 25 µM Ramostatin. The compound was added as a 1000-fold stock dissolved in DMSO. Seeds were sterilized by immersion for 10 min in 1% (w/v) chlorine bleach dissolved in 90% ethanol, washed three times in 96% ethanol and dried before use. Five seeds were placed in each jar and cold treated for at least 2 days in the dark at 4°C. Plants were then placed in a growth room (24°C, 16-h light period, around 150 µmol m⁻² s⁻¹ photosynthetically active radiation) for 45 days, until cessation of primary meristem activity and analyzed for axillary rosette branching and documented, thereafter. All *max* mutants showed a RS induced partial suppression of branching to a level of untreated wild-type plants (Fig. 3A-H, K).

Moreover RS does not seem to increase the strigolactone steady-state levels in Arabidopsis (Fig. 3N) as indirectly determined using an Orobanche germination assay. *Orobanche aegyptiaca* seeds were conditioned by suspending sterilized seeds in distilled water and distributing them on sterile filter paper in a Petri dish and stored for 14 days at 28°C in the dark. For extraction of root exudates 15mg of *Arabidopsis* WT Col0 seeds were sterilized and added to 15ml glass beads in a sterile Petri dish containing 9ml 0.1x MS without sugar added to increase strigolactone exudation. 25µM Ramostatin was added from a 100mM stock in DMSO and the plates were incubated for 14 days in a growth chamber (24 °C, 16-h light period, around 150 µmol m⁻² s⁻¹ photosynthetically active radiation). Strigolactone exudate was then extracted three times from the diluted medium with equal volumes of ethyl acetate. After evaporation of ethyl acetate at room temperature 1ml acetone per 200mg fresh weight was added and 60-100 conditioned *Orobanche aegyptiaca* seeds were treated with root exudates corresponding to 100mg fresh weight on sterile filterpaper in a 6-well plate for another 10 days at 24°C. Germinated seeds were counted under a stereo microscope. Seeds were considered as germinated when the radicle protruded out of the seed coat. 50nM GR24 served as control. The percentage of germinated seeds ±standard errors (SE) was determined from seven independent experiments. An analysis of variance was performed on the results using students t-test (P <0.05). RS does not increase the strigolactone steady-state levels in Arabidopsis as shown in Fig. 3N.

We also tested the effect of RS on a mutant of *BRC1,* a transcription factor acting downstream of strigolactones in branching suppression. Similarly to the *max* mutants, *brc1* also showed significant responsiveness to RS (Fig 3, L). Taken together RS appears to act in a strigolactone and BRC1 independent pathway. This correlated with no significant upregulation of BRC1 expression after RS treatment (Fig. 3M). Expression analysis was performed by qRT-PCR. RNA was extracted from 40 days old plants (Qiagen, RNAeasy Plant Mini Kit). Genomic DNA was eliminated using RNase-free DNase (Qiagen) by on column digestion according to the manufacturer's instructions and the quality of purified RNA was tested using the OD₂₆₀/OD₂₈₀ ratio. cDNA templates were generated using the RevertAid H Minus First Strand cDNA Synthesis Kit (Fermentas). Real-time quantitative PCR analysis was performed using the Promega Kit with GoTaq qPCR Master mix following the manufacturer's instructions. 10 µl-volume reactions were performed utilizing an Applied Biosystems StepOne Plus optical system. The following BCR1-specific oligos were used: BCR1F: GTCTCATATCCGACCGGTGTTAGG and BCR1R: TGTTTCCTCTTGTTTCGGTCGTG. In order to transform fluorescence intensity data into cDNA levels a standard curve with a 5-fold dilution series of a single cDNA sample was constructed. For each sample, results obtained for a given gene were normalized using the value of an internal standard gene (At1g13440) based on the comparative threshold (CT) method. Relative values for different samples were normalized to the gene of interest control sample, which was set to one. The specificity of the amplification reactions was assessed using post-amplification dissociation curves. In all cases, at least two biological and two technical replicates were carried out.

### Example 4

### Dependency on apical auxin

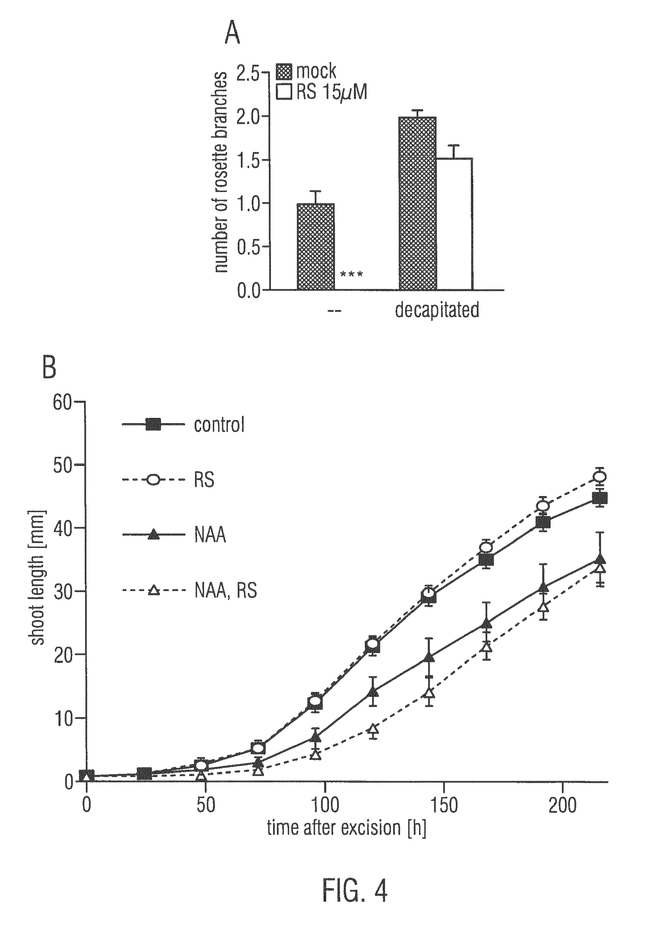

The plant hormone auxin mediates apical dominance by being transported from the primary shoot apex downwards through the stem in a polar fashion (Domagalska and Leyser, 2011). To assess whether apical auxin is important for RS action we tested RS activity on decapitated plants. Decapitation of the main stem was carried out 5 d after bolting in plants grown in jars under sterile conditions (see Example 2), and the point of the decapitation was below the lowest cauline shoot. RS was not able to suppress shoot branching in plants where the main apex was cut off (Fig. 4 A). The same dependency on apical auxin we could observe in isolated cauline nodes, where bud outgrowth in the presence of RS was only attenuated if the synthetic auxin NAA was co-applied at the apical end (Fig. 4 B). The split plate assay was performed essentially as described in (Chatfield et al., 2000). Plants were grown in sterile conditions for 3 weeks, until bolting occurred. The first cauline nodal section was then excised and placed between two agar blocks in a square Petri dish. In this study, Naphthylacetic acid (NAA, Sigma) and Ramostatin were added to ATS medium containing 1% sucrose, 0.8% agar in the indicated concentrations prior to pouring into Petri dish to assess effects on bud outgrowth. An 8mm wide strip was excised in the middle of each dried plate to generate two halves of equal size. These halves were than combined in fresh Petri dishes to create the needed combinations. The length of buds was assessed daily for 10 days.

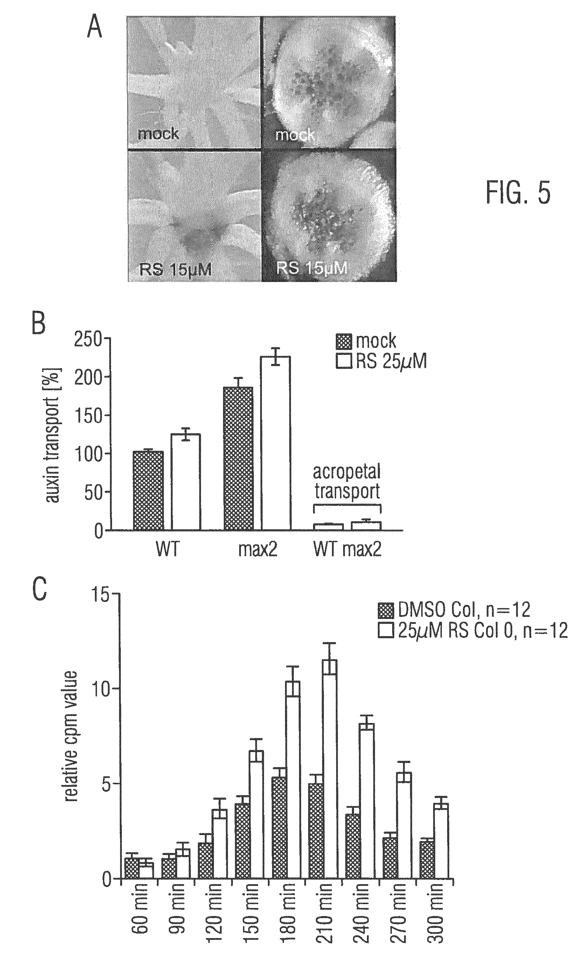

To further analyse the interaction between auxin and RS we analysed auxin responsiveness in RS-treated plants using the reporter DR5-GUS. We found increased DR5-GUS expression in the axils of rosette leaves as well as the cambial areas of the vascular bundels, where polar auxin transport takes place (Fig. 5A). For this analysis 4-week-old *DR5::GUS* plants grown in jars under sterile conditions (see Example 2). Plants were first placed in 90% (w/v) acetone for 30min on ice, washed once with water, placed in X-Gluc staining solution (0.5 mg/mL 5-bromo-4-chloro-3-indoyl-b-D-glucuronide, 50mM sodium phosphate [pH 7.0], 0.05% Triton-X-100, 0.1 mM K₄Fe(CN)₆, and 0.1 mM K₃Fe(CN)₆), evacuated for 15 min and incubated at 37°C for 24 hr. Tissue was then destained in 96% (w/v) ethanol followed by stepwise rehydration to 10% (w/v) ethanol.

To test whether RS influences polar auxin transport we measured it by different means. In a simple polar auxin transport assay we found that local short-term treatment with RS significantly increased the amount of radioactive IAA transported through an inflorescence stem segment (Fig 5B).

To measure polar auxin transport the apical ends of 15 mm stem segments (all from the first cauline internode) were incubated for 18 hr (under constant light conditions) in 30 mL of 0.5x ATS medium (no sucrose), containing 1 mM ¹⁴C labeled IAA (American Radiolabeled Chemicals, St Louis, MO). After this time, the basal 5 mm of the stem segment was excised, and the radiolabel was extracted by treatment with 80% (w/v) methanol for 48 hr. The amount of radiolabel was then quantified by scintillation in the presence of Microscint-40 (Perkin-Elmer). To further evaluate whether this is due to enhanced speed of transport or increased transport capacity we performed a time course assay, which revealed that more radioactive IAA is transported at the same velocity in RS-treated stem segments compared to the mock control (Fig. 5C). Thus RS acts as a polar auxin transport capacity enhancer.

For the polar auxin transport capacity experiment a ramostatin pre-treatment was performed: stem segments of 35- 40 day old soil-grown plants (grown to a shoot height of 7- 14cm) were incubated in 3ml 0.5x ATS medium (no sucrose) with 0.05% Triton X-100 and 25µM ramostatin (or DMSO only for controls) in a closed 50ml tube under constant light at 21 °C overnight for 14.5 hours. Immediately above the rosette 25mm stem segments were excised, and bundles of 6 stems per sample were used to increase the signal-to-noise ratio. For the pulse, the apical ends were incubated under constant light at 24°C in 200µl 0.5x ATS/0.05% Triton X-100/25µM ramostatin (or DMSO only) containing 3 µM ¹⁴C labeled IAA (American Radiolabeled Chemicals Inc., St. Louis, MO with a specific activity of 55 mCi/mmole) for 1 hour. For the chase, the stem exudate was collected in 30 minute steps over a period of 5 hours as follows: The basal ends of the stem segments were incubated in 120 µL 2.5 mM diethyl-dithiocarbamate under constant light for 30 minutes each time and successively transferred to fresh buffer nine more times. 100µl of the diethyl-dithiocarbamate buffer was transferred to 3ml Microscint-40 (Perkin Elmer, Inc.), and the radiolabeled IAA collected in each period was quantified in a CPM assay (count time: 10 minutes per sample) using a Tri-Carb 2810TR Liquid Scintillation Analyzer (Perkin Elmer, Inc.). The data presented show cpm values from one representative assay with 6 replicates per condition. The assay was independently repeated three times yielding similar results.

### Example 5

### Effect on lateral root formation

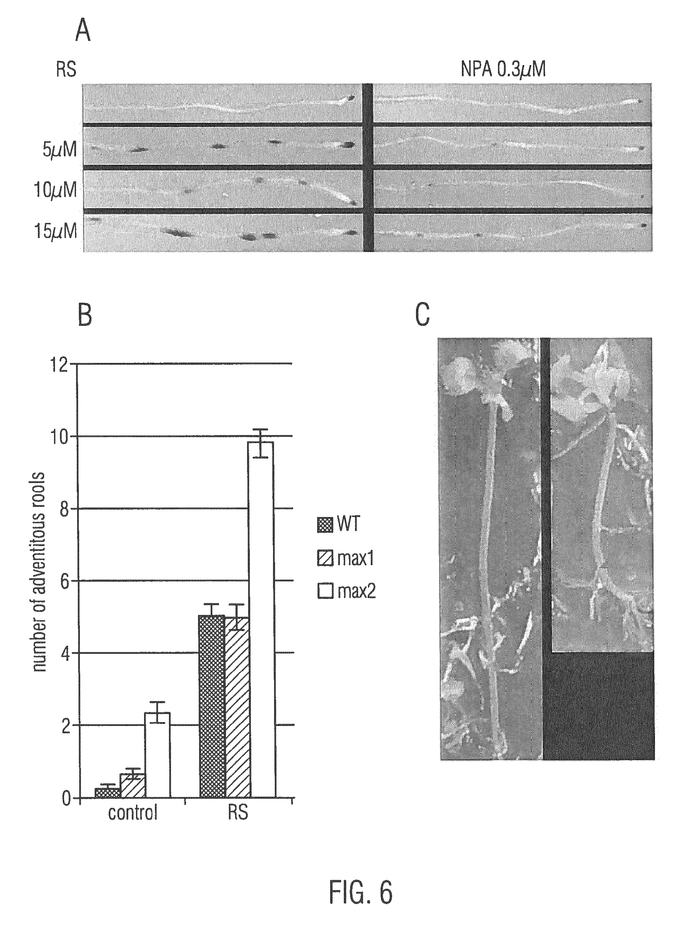

Next to shoot branching inhibition RS also exerted a positive effect on lateral root formation, another process regulated by polar auxin transport (Fig. 6A). Notably, this lateral root inducing effect could be nearly fully blocked by co-treatment with low concentrations of the polar auxin transport inhibitor NPA (Fig. 6 A).

Seeds were germinated on ATS medium with 0.6% Agar, 1% sucrose. At day 6, plants were transferred on ATS medium with 0.6% Agar, 1% sucrose containing the indicated concentrations of ramostatin in the absence or presence of 0.3 µM N-1-naphthylphthalamic acid (NPA, Sigma). After 24h lateral root primordia were visualized by histochemical analysis of DR5::GUS activity (as described in Example 4).

RS also enhanced adventitious root formation from the hypocotyl, a process particularly important for the rooting of cuttings as it is used for the clonal propagation of most horticultural crop plants. RS application caused a more than 10-fold increase in the number of hypocotyl-derived adventitious roots in wild-type (Fig. 6B, C) and was also able to further boost this process in mutants deficient in strigolactone biosynthesis or signaling (Fig. 6B).

Induction and measurement of adventitious roots in intact Arabidopsis plants were performed as described previously (Rasmussen et al., 2012) with minor modifications. WT Col0, *max1-1* and *max2-1* were placed in the dark in a controlled growth chamber at 24°C for 4 d. The plates were then exposed to light (16-h day) at 24°C for 7 d. The number of adventitious roots and the hypocotyl length were then determined using a Leica MZ 16 FA stereo microscope and ImageJ software. Ramostatin (10µM) were added to ATS medium with 0.6% Agar, 1% sucrose prior to pouring the plates.

### Example 6

### Structural requirements

Different structural analogs of RS were tested for their activity on shoot branching and lateral root formation. The results are shown in Table I below. First, we tested modifications on benzoyl ring 1, which harbors I in meta position in RS. Exchange of the meta-positioned I to halogens with lower electron withdrawing potential like Br or Cl also slightly lowered the activity in the branch inhibition assay and the root induction experiment. Benzoyl ring 2 in RS possesses a methyl side chain in ortho position and its removal reduced the activity to 20%. In contrast exchange of the methyl group to a halogen (I or Br) resulted in molecules with similar or higher activity when applied at concentrations of 5 µM or 10 µM. Interestingly analogs in which benzoyl ring 2 was substituted by a heptan chain or cyclopentyl ring also exhibited considerable shoot branching inhibitory activity and a positive effect on lateral root formation.

To compare the activity of Ramostatin structural analogs on shoot branching, plants were grown in jars under sterile conditions (Weck, sealed with Leucopor, BSN medical) on 50 ml of ATS media (Lincoln et al., 1990) containing 1% sucrose and 0.7% agar, supplemented with indicated concentrations of the compounds. The compound was added as a 1000-fold stock dissolved in DMSO. As mock control, plants only treated with the solvent were used. Seeds were sterilized by immersion for 10 min in 1% (w/v) chlorine bleach dissolved in 90% ethanol, washed three times in 96% ethanol and dried before use. Five seeds were placed in each jar and cold treated for at least 2 days in the dark at 4°C. Plants were then placed in a growth room (24 °C, 16-h light period, around 150 µmol m⁻² s⁻¹ photosynthetically active radiation) for 40-50 days, until cessation of primary meristem activity and analyzed for axillary rosette branching and documented, thereafter.

To compare the activity of Ramostatin structural analogs on lateral root induction, *DR5::GUS* seeds were germinated on ATS medium with 0.6% Agar, 1% sucrose and the indicated concentrations of the diverse structural analogs. The compounds were added as 1000-fold stocks dissolved in DMSO. 6 days after germination the rate of lateral root formation was quantified after visualization of lateral root primordia by histochemical analysis of DR5::GUS activity (as described in Example 4).

**TABLE I**

| | | R1 | R2 | bridge | Number of rosette † branches normalized to WT DMSO | DR5: GUS‡ |
|---|---|---|---|---|---|---|
| **mock (DMSO)** | | | | | 1.00 +/- 0.12 | - |
| Structure of formula I | | | benzyl ring substituted with | | | |
| **Ramostatin** | | I | CH3 | N-N | 0.00 +/- 0.00 | ++ |
| | substitution | **Br** | CH3 | N-N | 0.20 +/- 0.09 | + |
| | | | | | | |
| | substitution | I | I | N-N | 0.13 +/- 0.09** | +++ |
| | | Br | Br | N-N | 0.20 +/- 0.09* | ++ |
| | | Br | | N-N | 0.75 +/- 0.40 | + |
| | position | Cl | **CH3 (meta)** | N-N | 0.67 +/- 0.17 | + |
| | | I | **CH3 (para)** | N-N | 0.13 +/- 0.09 | + |
| | | | benzyl ring replaced with | | | |
| Br | | | heptan chain | N-N | 0.15 +/- 0.14 | + |
| I | | | cyclopentyl ring | N-N | 0.03 +/- 0.06 | +++ |

| | | | | | | |
|---|---|---|---|---|---|---|
| + in number and intensity lower than Ramostatin; + +, in number and intensity equal to Ramostatin; + + +, stronger than Ramostatin; - no staining * tested at 5µM ** tested at 10µM † Normalized secondary rosette branch number in WT Col 0 in response to treatment with 25 µM (or other concentration as indicated */**/) of compounds with altered residues on ring 1 (R1, at meta or indicated) or ring 2 (R2, at ortho or indicated) of Ramostatin, N' -(3-iodobenzoyl)-2-methylbenzohydrazide, or when ring 2 was replaced with a heptan chain, cyclopentyl ring. Measurements were made after cessation of primary meristem activity (approximately 7 weeks); n=10-20, SE are indicated. Data is representative for 3 independent experiments. ‡ DR5: GUS positive foci representing lateral root primordia: | | | | | | |

### References:

Aguilar-Martinez, J. A., Poza-Carrion, C., & Cubas, P. (2007). Arabidopsis BRANCHED1 Acts as an Integrator of Branching Signals within Axillary Buds. Plant Cell, 19(2), 458-472.
Basra, A. S., (2000) Plant Growth Regulators in Agriculture and Horticulture: Their Role and Commercial Use. Food Products Press (ISBN: 1560228962)
Chatfield, S. P., Stirnberg, P., Forde, B. G., & Leyser, O. (2000). The hormonal regulation of axillary bud growth in Arabidopsis. PLANT J 24, 159-169.
De Klerk, G.-J., van der Krieken, W., & de Jong, J. C. (1999). Review the formation of adventitious roots: new concepts, new possibilities. In Vitro Cellular & Developmental Biology-Plant, 35(3), 189-199.
Domagalska, M. A., & Leyser, O. (2011). Signal integration in the control of shoot branching. NAT REV MOL CELL BIO, 12, 211-221
Gamborg, O. L., Miller, R. A. & Ojima, K. Nutrient requirements of suspension cultures of soybean root cells. Exp. Cell Res. 50, 151-158 (1968).
Gross-Hardt, R., Lenhard, M., & Laux, T. (2002). WUSCHEL signaling functions in interregional communication during Arabidopsis ovule development. Genes & Dev., 16(9), 1129-1138.
Lincoln, C., Britton, J. H., & Estelle, M. (1990). Growth and development of the axr1 mutants of Arabidopsis. Plant Cell, 2(11), 1071-1080.
Murashige, T. and Skoog, F. (1962), A Revised Medium for Rapid Growth and Bio Assays with Tobacco Tissue Cultures. Physiologia Plantarum, 15: 473-497
Stirnberg, P., van De Sande, K., and Leyser, H.M. (2002). MAX1 and MAX2 control shoot lateral branching in Arabidopsis. Development 129, 1131-1141.
Booker, J., Auldridge, M., Wills, S., McCarty, D., Klee, H., and Leyser, O. (2004). MAX3/CCD7 is a carotenoid cleavage dioxygenase required for the synthesis of a novel plant signalling molecule. Curr. Biol. 14, 1232-1238.
Rasmussen, A., Mason, M. G., De Cuyper, C., Brewer, P. B., Herold, S., Agusti, J., et al. (2012). Strigolactones suppress adventitious rooting in Arabidopsis and pea. PLANT PHYSIOL., 158, 1976-1987.
Sorefan, K., Booker, J., Haurogne, K., Goussot, M., Bainbridge, K., Foo, E., Chatfield, S., Ward, S., Beveridge, C., Rameau, C., et al. (2003). MAX4 and RMS1 are orthologous dioxygenaselike genes that regulate shoot branching in Arabidopsis and pea. Genes Dev. 17, 1469-1474.

## Claims

1. A plant growth regulator of formula I: 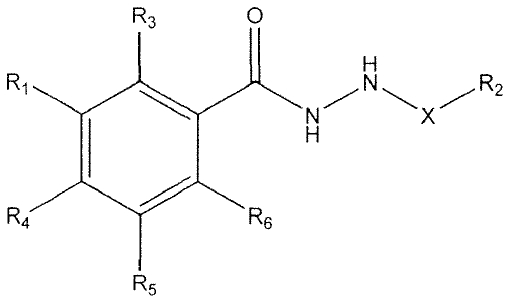 or a salt thereof, wherein R₁ is halogen or pseudohalogen;
R₂ is C₁-C₁₀ alkyl, C₅-C₈ cycloalkyl, C₄-C₁₂ heterocycle, C₆-C₁₂ aryl, C₆-C₁₂ aryl substituted with C₁-C₄ alkyl or halogen;
X is carbonyl or thionyl; and
R₃ R₄ R₅ and R₆ are independently selected from the group consisting of hydrogen, halogen, C₁-C₁₀ alkyl or C₁-C₁₀ haloalkyl.

2. The plant growth regulator according to claim 1, wherein R₁ is halogen.

3. The plant growth regulator according to claim 2, wherein R₁ is iodine or bromine.

4. The plant growth regulator according to any one of claims 1 to 3, wherein R₂ is benzyl substituted with C₁-C₄ alkyl or halogen; X is carbonyl and R₃ R₄ R₅ and R₆ are each hydrogen.

5. The plant growth regulator according to any one of claims 1 to 4, wherein R₂ is ortho methyl benzyl.

6. The plant growth regulator according to claim 1, wherein the plant growth regulator of formula I has any of the following structures:

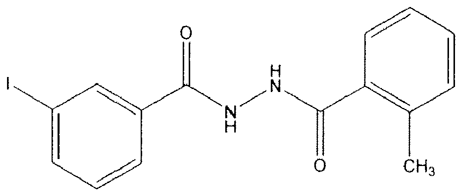

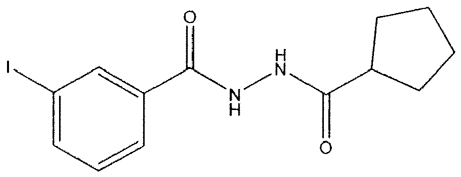

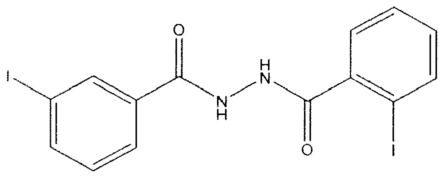

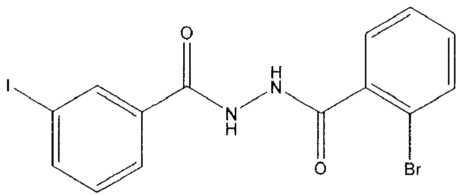

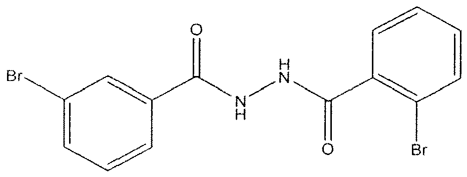

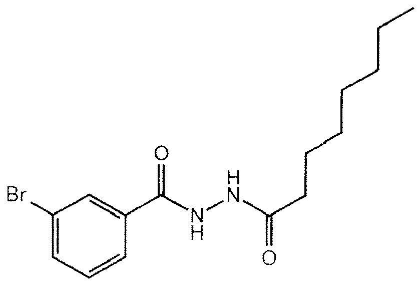

7. The plant growth regulator according to any one of claims 1 to 6, wherein the plant growth regulator of formula I modulates organ formation in plants.

8. The plant growth regulator according to any one of claims 1 to 7, wherein the plant growth regulator of formula I inhibits shoot branching.

9. The plant growth regulator according to any one of claims 1 to 8, wherein the plant growth regulator of formula I enhances root formation.

10. A composition for regulating plant growth comprising one or more plant growth regulators of any one of claims 1 to 9 and an agriculturally acceptable support, carrier or filler.

11. The composition for regulating plant growth according to claim 10, wherein the agriculturally acceptable support, carrier or filler is a solid or a liquid organic or inorganic material.

12. A process for growth regulation of plants comprising the step of contacting the plant with a plant growth regulator of any one of claims 1 to 9.

13. The process for growth regulation of plants according to claim 12, wherein the step of contacting the plant with a plant growth regulator of any one of claims 1 to 9 is performed by direct application to the plant or a part thereof or by applying to the growth medium.

14. Use of a plant growth regulator of any one of claims 1 to 9 for modulation of organ numbers in plants.

15. The use according to claim 14, wherein the plants are selected from agricultural, horticultural crops or silvicultural crops.
